# EUROPÄISCHE PATENTANMELDUNG

(11) **EP 2 581 006 A1**
(43) Veröffentlichungstag der Anmeldung: **17.04.2013**
(21) Anmeldenummer: 12188463.9
(22) Anmeldetag: 15.10.2012
(51) Int. Cl.: A47J 43/26

(54) **Nussknacker zum Aufbrechen von Nüssen durch Schwenk- oder Schüttelbewegung**

(30) Priorität: 15.10.2011 DE 202011106858 U
(71) Anmelder: Take2-Designagentur GmbH & Co. KG, 83024 Rosenheim (DE)
(72) Erfinder: Staudinger, Hermann, 87730 Bad Grönenbach (DE)
(74) Vertreter: Becker Kurig Straus

(57) **Zusammenfassung**

Die vorliegende Erfindung betrifft einen Nussknacker zum manuellen Öffnen von Nuss-Schalen durch eine einfache Schwenk- oder Schüttelbewegung, mit einer Hülse (1, 1'), in der ein Stößel (3) beweglich angeordnet ist, wobei der Stößel (3) mit einem Befestigungsbolzen (9) an einer Feder (8) befestigt ist, wobei die Feder (8) wiederum mit einem Hülsendeckel (4) verbunden ist, wobei der Hülsendeckel (4) an einem Ende der Hülse (1, 1') angeordnet ist, wobei ein die Hülse (1, 1') ein Bodenelement (5) aufweist, das sich an einem, dem Hülsendeckel (4) gegenüberliegenden Ende befindet, wobei die Hülse (1, 1') eine Öffnung (11) für Nuss-Schalen umfasst.

## Beschreibung

Die Erfindung betrifft einen Nussknacker zum Aufbrechen von Nüssen durch eine einfache manuelle Schwenk- oder Schüttelbewegung.

Der Nussknacker umfasst eine rohrförmige Hülse, einen Stößel, der mit einem Befestigungsbolzen an einer Feder hängt, die wiederum mit einem dem Hülsendeckel verbunden ist, sowie ein verschiebbares Verschlusselement, durch das eine Füll-Öffnung während des Knack-Vorgangs verschlossen wird.

Im Stand der Technik sind Nussknacker in vielfältigen Ausführungen bekannt.

Meist werden bei Nussknackern die Nüsse zum Knacken zwischen die Backen einer Zange geklemmt, um dann durch Hebeldruck zerquetscht zu werden.

Andere Nussknackergeräte weisen ein Schraubgewinde auf, durch das die Nuss gegen eine Fläche gegen gepresst und dadurch geknackt wird.

Bei beiden Arten von Nussknackern ist relativ viel Kraft in den Händen nötig, wodurch sie von Kindern und älteren Personen nur schwer bedient werden können.

Bei den zangenartigen Geräten besteht außerdem eine Verletzungsgefahr durch Einklemmen der Finger oder des Handballens.

Ferner gibt es Nussknacker mit einer Hülse, die nach dem Prinzip einer Schleuder funktionieren, mit der die Nuss gegen eine Aufprallfläche geschleudert wird. Es gibt ebenfalls Nussknacker mit einem Stößel, der von oben mit Kraft auf die Nuss gestoßen wird und diese dadurch zertrümmert. Andere Nussknacker arbeiten mit Schlagbolzen und Bolzenfeder in einer Röhre bzw. Hülse. Bei den Nussknackern mit Schleuder-Prinzip oder Bolzen ist die Schlagwirkung schlecht dosierbar, es wird daher oft entweder zu wenig Kraft oder zuviel Kraft übertragen, so dass entweder die Schale nicht geknackt oder der Nusskern zerquetscht wird. Ferner ist für den Rückzugsmechanismus der Schlagbolzen wie auch für den Schlag mit einem Stößel ein hoher Kraftaufwand erforderlich.

Es gibt auch Nussknacker mit einer Hülle, die ein Herumfliegen von Nuss-Schalen verhindert.

Bei dem Nussknacker, der in dem deutschen Gebrauchsmuster Nr. DE 20 2009 014 530 U1 offenbart ist, ist ein beweglicher Stößel in einem Hohlkörper angeordnet, der eine Öffnung zum Einlegen und zum Herausnehmen einer Nuss aufweist. Der bekannte Nussknacker ist einfach zu bedienen, erfordert wenig Kraftaufwand, weist eine geringe Verletzungsgefahr auf und ist folglich auch für Kinder und ältere Personen geeignet. Jedoch kann der Stößel die Öffnung versperren, was die Bedienung erschwert.

Eine Aufgabe der vorliegenden Erfindung besteht darin, einen Nussknacker bereitzustellen, der sowohl die Vorteile der vorgenannten Geräte mit Hülse und Stößel in sich vereint und zudem eine hohe Effizienz sowie eine gute Dosierung der Krafteinwirkung ermöglicht.

Zudem ist es wünschenswert, dass ein Nussknacker in jeder Position einfach befüllt und entleert werden kann.

Weiterhin ist es wünschenswert, dass in einem geschlossenen Zustand eines Nussknackers erkennbar ist, ob der Schlagvorgang erfolgreich war.

Weiterhin ist es wünschenswert, dass ein Nussknacker so beschaffen ist, dass sich der Verschluss nicht ungewollt öffnet.

Diese Aufgabe wird durch einen Nussknacker mit den Merkmalen des Anspruchs 1 gelöst. In den abhängigen Ansprüchen sind vorteilhafte Ausführungsformen beschrieben.

Der vorliegende Nussknacker dient zum manuellen Öffnen von Nuss-Schalen durch eine einfache Schwenk- oder Schüttelbewegung des Nussknackers. Der Nussknacker umfasst eine Hülse, in der ein Stößel beweglich angeordnet und gelagert ist. Der Stößel ist mit einem Befestigungsbolzen an einer Feder befestigt. Die Feder ist wiederum mit einem Hülsendeckel verbunden. Der Hülsendeckel ist an einem Ende der Hülse angeordnet. Die Hülse weist an einem, dem Hülsendeckel gegenüberliegenden Ende ein Bodenelement auf.

Weiterhin umfasst die Hülse eine Öffnung, die bevorzugt mit einem Verschlusselement verschlossen werden kann. Die zu öffnende Nuss-Schale wird durch die Öffnung eingelegt und ein Schlag zum Öffnen der Nuss-Schale wird durch den Stößel in Richtung der Nuss-Schale geführt, woraufhin der Stößel von der Feder zurückgeholt wird und die geöffnete Schale durch die Öffnung entnommen werden kann.

In einem weiteren Aspekt kann der Schlag in einem beliebigen Winkel dosiert ausgeführt werden. Nach einem Schlag wird der Stößel durch die Feder in eine Ausgangsposition zurückgeholt, so dass die Öffnung mit einem Verschlusselement in jeder Position zum Befüllen geöffnet und entleert werden kann.

In einer Ausführungsform des Nussknackers ist die Feder als Stahlfeder ausgeführt. Stahlfedern weisen eine besonders geringe innere Dämpfung auf und sind daher insbesondere für Nussknacker, die mit einer Schüttelbewegung Nüsse knacken sollen, geeignet.

In einer Ausführungsform des Nussknackers sind ein oder mehrere Löcher und/oder seitliche Rillen in dem Stößel angeordnet. Das oder die Löcher ermöglichen einen Luftaustausch und wirken einem Luftstau im Innern der Hülse entgegen, dadurch kann der benötigte Kraftaufwand für das Zerschlagen einer Nuss-Schale verringert werden.

In einer weiteren Ausführungsform des Nussknackers sind Löcher in dem Hülsendeckel und/oder dem Bodenelement vorgesehen. Hier wird das Problem von Luftpolstern, die einer Bewegung des Stößels entgegenwirken, durch Löcher gelöst, die einen Luftaustausch nach außen ermöglichen und einen Luftstau im Innern der Hülse verhindern. Durch die Löcher muss weniger Kraft aufgewendet werden, um eine Nuss zu knacken.

In einer zusätzlichen Ausführungsform des Nussknackers ist das Verschlusselement durchsichtig oder umfasst ein durchsichtiges Material. Damit kann ein Benutzer durch das Verschlusselement und die Öffnung in das Innere des Nussknackers blicken und erkennen, ob die bisherigen Bemühungen bezüglich des Aufbrechens einer Nuss-Schale erfolgreich waren. Das Verschlusselement kann vollständig aus einem durchsichtigen Material bestehen oder auch nur ein durchsichtiges Fenster aufweisen. Wenn das Verschlusselement lediglich ein durchsichtiges Fenster aufweist und die Hülse undurchsichtig ist, sollte sichergestellt werden, dass das Fenster bei geschlossenem Verschlusselement über der Öffnung der Hülse angeordnet ist.

In einer zusätzlichen Ausführungsform des Nussknackers ist die Hülse durchsichtig oder umfasst ein durchsichtiges Material. Durch eine durchsichtige Hülse kann in Kombination mit einem durchsichtigen Verschlusselement sehr leicht erkannt werden, ob eine Nuss bereits geknackt wurde. Bei Verwendung eines durchsichtigen Verschlusselements und einer durchsichtigen Hülse kann viel mehr Licht durch den Nussknacker fallen, was es auch bei schlechter Beleuchtung ermöglicht, eine geknackte oder intakte Nuss zu erkennen.

In einer zusätzlichen Ausführungsform des Nussknackers ist der Bodenelement des Nussknackers durchsichtig oder besteht aus einem durchsichtigen Material. Da das Bodenelement beim Nussknacken stark belastet wird, bietet sich für das Bodenelement ein bruchsicheres Glas an. Ein bruchsicheres Glas kann eine Oberfläche aufweisen, die auch nach mehreren Knackvorgängen nicht matt und undurchsichtig wird. Ein Bodenelement aus bruchsicherem Glas kann eine spezielle Aufnahme erfordern, um das Glasbodenelement mit der Hülse zu verbinden.

In einer anderen Ausführungsform des Nussknackers sind das Verschlusselement und/oder die Hülse mit durchsichtigen Flächenformen versehen. Die durchsichtigen Flächenformen gestatten es, eine Nuss in dem Nussknacker ohne irgendwelche Verzerrungen zu betrachten. Eine solche Ausführung bietet sich besonders bei Nussknackern mit einem poligonalen Querschnitt an. So kann man besonders gut auch im geschlossenen Zustand erkennen, ob sich auf der Nuss-Schale Risse gebildet haben oder ob ein weiterer Einsatz des Nussknackers erforderlich ist.

In einer zusätzlichen Ausführungsform des Nussknackers weist das Verschlusselement am unteren Ende an der Innenseite eine konisch geformte Fläche auf. Durch diese konische Fläche kann sich das Verschlusselement an der Hülse oder dem Bodenelement festklemmen, wodurch ein Verrutschen und ein ungewolltes, selbstständiges öffnen des Nussknackers verhindert werden kann. Die konische Fläche kann weiter dazu bestimmt sein, mit einem entsprechenden Gummiring in Kontakt zu treten und so das Verschlusselement festzuhalten.

In einer weiteren Ausführungsform des Nussknackers ist ein Gummiring vorgesehen, der das Verschlusselement gegen Verrutschen sichert. Der Gummiring kann in einer Nut in der Nähe des Bodenelements des Nussknackers angeordnet sein. Der Gummiring kann nur teilweise in einer Nut eingelassen sein. Durch den Gummiring, der beispielsweise mit einer konischen Fläche des Verschlusselements in Kontakt tritt, kann ein ungewolltes, selbstständiges Öffnen wie auch ein Herabgleiten des Verschlusselements von der Hülse verhindert werden.

In einer zusätzlichen weiteren Ausführungsform des Nussknackers ist mindestens ein Gummiring an dem Stößel angeordnet, der einen Aufprall des Stößel auf dem Hülsendeckel oder einem entsprechenden oberen Anschlag in der Hülse dämpft, wenn sich der Stößel nach oben bewegt. In einer zusätzlichen weiteren Ausführungsform des Nussknackers ist mindestens ein Gummiring an dem Stößel angeordnet, der einen Aufprall des Stößel auf dem Bodenelement oder auf einem entsprechenden unteren Anschlag in der Hülse oder dem Hülsendeckel dämpft, wenn sich der Stößel nach unten bewegt.

In noch einer weiteren Ausführungsform des Nussknackers ist ein Gummiring am Hülsendeckel angebracht, der das Verschlusselement sichert. Durch den Gummiring wird ein ungewolltes, selbstständiges Herausgleiten der Hülse aus dem Verschlusselement verhindert.

Gemäß einer weiteren Ausführungsform des Nussknackers ist die Feder bzw. Stahlfeder zwischen dem Stößel und dem Hülsendeckel als Zugfeder ausgelegt. In dieser Ausführungsform kann die Ruheposition des Stößels direkt an dem Hülsendeckel liegen. Eine Nuss wird dann durch eine einfache Abwärtsbewegung des Nussknackers geknackt, die abrupt gestoppt wird.

Gemäß einer zusätzlichen Ausführungsform des Nussknackers wirkt die Feder bzw. die Stahlfeder zwischen dem Stößel und dem Hülsendeckel sowohl als Zug- als auch als Druckfeder. In dieser Ausführung liegt die Ruheposition des Stößels zwischen dem Hülsendeckel und dem Bodenelement. Diese Ausführungsform ist vor allen für ein Knacken von Nüssen durch eine Schüttelbewegung geeignet. Diese Ausführungsform wird am besten in der Resonanzfrequenz des Systems Stößel/Feder angeregt. In dieser Ausführungsform tritt der Vorteil einer geringen inneren Dämpfung einer Stahlfeder in den Vordergrund. Hier wird die Nuss geknackt indem der Nussknacker geschüttelt wird.

Gemäß einer weiteren Ausführungsform des Nussknackers weist die Hülse einen rechteckigen bevorzugt einen quadratischen Querschnitt auf.

Bei einer zusätzlichen Ausführungsform des Nussknackers ist ein unterer Anschlag zwischen Stößel und der Hülse bzw. dem Hülsendeckel vorgesehen, der die Bewegung des Stößels in Richtung Bodenelement begrenzt. Durch diesen Anschlag kann die Belastung des Bodenelements verringert werden, indem verhindert wird, dass der Stößel ungebremst auf das Bodenelement aufschlägt. Vorzugsweise ist der Anschlag verstellbar, um eine minimale Höhe zwischen dem Bodenelement und dem Stößel einstellen zu können. Durch den Anschlag kann verhindert werden, dass ein Nusskern zu stark zerdrückt wird.

Bei einer weiteren Ausführungsform des Nussknackers ist ein Dämpfungselement außen am Bodenelement angeordnet. Das Dämpfungselement kann als Gummi- oder Silikonpuffer ausgeführt sein. Das Dämpfungselement gestattet es, den Nussknacker mit Schwung beispielsweise auf eine Tischplatte zu schlagen, ohne dass Beschädigungen der Tischplatte zu befürchten wären. Sollte eine normale Schwenk- oder Schüttelbewegung nicht ausreichen, um eine Nuss zu knacken, kann die Bewegung des Nussknackers durch den Dämpfer beispielsweise an einer Tischplatte gestoppt werden, wodurch eine höhere Schlagkraft des Stößels erzielt werden kann. Das Dämpfungselement sollte hinreichend starr sein, so dass der Nussknacker noch darauf abgestellt werden kann. Das Dämpfungselement ist bevorzugt unten an dem Bodenelement angebracht. Das Dämpfungselement weist bevorzugt eine zylindrische Gestalt auf. Das Dämpfungselement sollte hinreichend hart sein, um eine Bewegung des Nussknackers schnell stoppen zu können. Das Dämpfungselement sollte jedoch auch hinreichend weich sein, um eine Bewegung einer durchschnittlichen Tischplatte ausschließen zu können. Das Dämpfungselement kann auch als Gummiring ausgeführt sein, der über das Bodenelement nach unten vorsteht. Ein ringförmiges Dämpfungselement kann einen Fuß zum Abstellen des Nussknackers bilden. Ein ringförmiges Dämpfungselement kann integral mit einem Gummielement ausgeführt werden, das zum Blockieren des Verschlusselements dient. Ein ringförmiges Dämpfungselement kann so ausgeführt werden, dass die allgemein zylindrische Gestalt des Nussknackers nahezu nicht verändert wird.

In Folgenden wird die Erfindung anhand der Figuren beschrieben.
Figur 1 stellt eine seitliche Längs-Schnittansicht einer Ausführungsform eines erfindungsgemäßen Nussknackers in einem geschlossenen Zustand dar.
Figur 2 zeigt eine Draufsicht im Querschnitt.
Figur 3 zeigt eine Seitenansicht des Nussknackers in einem geöffneten Zustand.
Figur 4 zeigt eine Draufsicht auf einen im Querschnitt quadratischen Nussknacker.

Sowohl in den Figuren als auch in den Zeichnungen werden gleiche oder ähnliche Bezugszeichen verwendet, um gleiche oder ähnliche Komponenten und Elemente zu bezeichnen. Die Figuren stellen den Gegenstand der vorliegenden Erfindung nur schematisch dar.

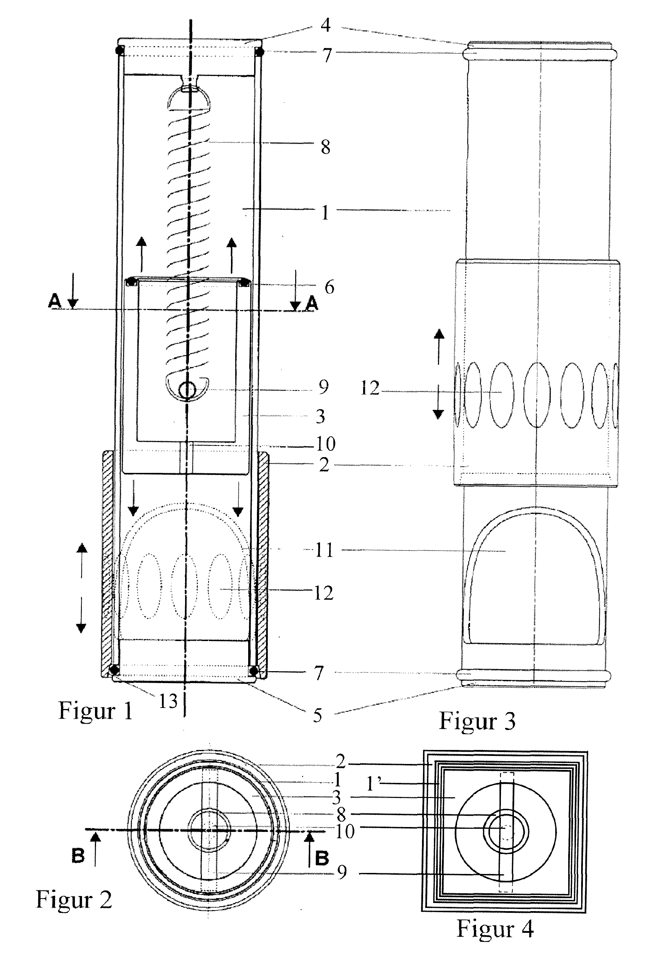

Figur 1 stellt eine seitliche Längs-Schnittansicht einer Ausführungsform eines erfindungsgemäßen Nussknackers in einem geschlossenen Zustand dar.

Der Nussknacker von Figur 1 umfasst eine rohrförmige Hülse 1 und einen Stößel 3, der mit einem Befestigungsbolzen 9 an einer Stahlfeder 8 befestigt ist bzw. an einer Stahlfeder 8 hängt. Die Stahlfeder 8 ist wiederum mit dem Hülsendeckel 4 verbunden. Der Nussknacker von Figur 1 umfasst weiter ein verschiebbares Verschlusselement 2, durch das eine Füll-Öffnung 11 während eines Knack-Vorgangs bzw. Schlages verschlossen werden kann. In Figur 1 ist das Verschlusselement 2 in einer geschlossenen Stellung dargestellt.

Der Stößel 3 bewegt sich beim Knackvorgang bzw. beim Schlag durch eine einfache Schwenk- oder Schüttelbewegung der Hülse 1 innerhalb der Hülse 1. Der Stößel knackt beim Auftreffen auf die Nuss deren Schale und wird durch die Stahlfeder 8 wieder in die Ausgangsposition zurückgezogen. Da der Stößel 3 nach dem Knacken wieder in die Ausgangsposition zurückkehrt, kann der Nusskern und die Nuss-Schale nach dem Öffnen des Verschlusselements 2 in jeder Lage des Nussknackers problemlos aus der Füll-Öffnung 11 entnommen werden. Durch die Füll-Öffnung 11 kann nun eine neue Nuss (bzw. können auch mehrere Nüsse) eingelegt werden. Ein Gummi- oder Silikonring 6 dient zur Dämpfung des Aufpralls des Stößels 3 auf dem Hülsendeckel 4.

Die Feder 8 ermöglicht außerdem das Dosieren der Schlagwirkung und verhindert einen unkontrollierten bzw. ungebremsten Aufprall des Stößels und somit ein vollständiges Zerquetschen des Nusskerns.

Löcher 10 im Hülsendeckel 4 und/oder im Bodenelement 5 ermöglichen einen Luftaustausch und verhindern einen Luftstau im Innern der Hülse 1, dadurch kann der benötigte Kraftaufwand zum Ausführen des Schlags verringert werden.

Durch durchsichtige Flächenformen 11 im Verschlusselement 2 ist auch im geschlossenen Zustand ersichtlich, ob der Knackvorgang erfolgreich war und die Nuss-Schale geöffnet ist.

In Figur 1 sind durchsichtige Flächenformen 11 an der Hülse 1 angeordnet, um die Sichtbarkeit der Nuss bzw. Nuss-Schale in dem Nussknacker zu erhöhen.

Gummiringe, bevorzugt Silikonringe 7 am Hülsendeckel 4 oder am Bodenelement 5 oder an der Hülse selbst sichern das Verschlusselement 2 gegen Verrutschen und verhindern sowohl ein ungewolltes, selbstständiges öffnen als auch ein Herabgleiten des Verschlusselements 2 von der Hülse 1. In den Figuren ist das Verschlusselement 2 als ein rohrförmiger Schieber ausgeführt.

Eine konisch geformte Fläche 13 am unteren Ende an der Innenseite des Verschlusselements 2 verhindert ein ungewolltes, selbstständiges Öffnen des Nussknackers.

Figur 2 zeigt eine Draufsicht auf den Nussknacker im Querschnitt, geschnitten entlang der Linie A-A von Figur 1. Im Querschnitt bildet das Verschlusselement 2 einen äußeren Ring, der die rohrförmige Hülse 1 umgibt.

In der Hülse 1 ist der Stößel 3 angeordnet, der über einen Befestigungsbolzen 9 mit der Stahlfeder 8 verbunden ist. Weiterhin umfasst der Stößel 3 ein Loch 10 zum Luftdruckausgleich.

Die Linie B-B stellt in Figur 2 die Schnittlinie dar, entlang der Schnitt der Figur 1 verläuft.

Figur 3 zeigt eine Seitenansicht des Nussknackers in einem geöffneten Zustand. In Figur 3 ist die rohrförmige Hülse 1 mit dem Hülsendeckel 4 und dem Bodenelement 5 zu erkennen. Die Hülse 1 ist unten mit einer Füllöffnung 10 für Nüsse versehen. Um die rohrförmige Hülse 1 liegt ein Verschlusselement bzw. Schieber 2, der durch die Silikonringe 7 gesichert ist. Das Verschlusselement 2 ist zusätzlich mit durchsichtigen Flächenformen 12 versehen, durch die bei geschlossenem Verschlusselement 2 der Blick auf eine in der Füllöffnung 10 befindlichen Nuss freigegeben ist.

Figur 4 zeigt eine Draufsicht auf einen im Querschnitt quadratischen Nussknacker. Die Schnittansicht von Figur 4 entspricht im Wesentlichen der Figur 2, wobei die Hülse 1' (und damit auch der Hülsendeckel 4 und das Bodenelement 5) einen quadratischen Querschnitt aufweisen. In Figur 4 ist auch der Stößel 3 mit einem quadratischen Querschnitt dargestellt. Es ist jedoch auch möglich einen runden Stößel oder einen acht-eckigen Stößel in dem rechteckigen Rohr einzusetzen. Die anderen Komponenten entsprechen der Figur 2. Es ist ebenfalls vorgesehen im Querschnitt dreieckige, fünfeckige, sechseckige oder achteckige Nussknacker auszuführen.

Eine Ausführung des Nussknacker mit Hülse 1 zum Öffnen einer Nuss-Schale per Hand durch eine einfache Schwenk- oder Schüttelbewegung ist dadurch gekennzeichnet, dass der Stößel 3 mit einem Befestigungsbolzen 9 an einer Stahlfeder 8 hängt, die wiederum mit dem Hülsendeckel 4 verbunden ist, wodurch der Schlag in beliebigem Winkel dosiert ausgeführt werden kann und der Stößel 3 nach jedem Schlag in die Ausgangsposition zurückgeholt wird, so dass die Öffnung 11 mit dem Verschlusselement 2 in jeder Position zum Befüllen geöffnet und der Nussknacker bedient werden kann.

Eine weitere Ausführung des vorstehend beschriebenen Nussknackers ist dadurch gekennzeichnet, dass Löcher 10 in Deckel 4 und Boden 5 einen Luftaustausch ermöglichen und einen Luftstau im Innern der Hülse 1 verhindern, wodurch die Effizienz erhöht und der benötigte Kraftaufwand verringert werden.

Eine andere Ausführung des vorstehend beschriebenen Nussknackers ist dadurch gekennzeichnet, dass das Verschlusselement 2 mit durchsichtigen Flächenformen 12 versehen ist, so dass auch im geschlossenen Zustand ersichtlich ist, ob der Knackvorgang erfolgreich war und die Nuss-Schale geöffnet ist.

Eine zusätzliche Ausführung des vorstehend beschriebenen Nussknackers ist dadurch gekennzeichnet, dass das Verschlusselement 2 am unteren Ende an der Innenseite eine konisch geformte Fläche 13 aufweist, wodurch ein Verrutschen und ein ungewolltes, selbstständiges öffnen verhindert werden.

Eine weitere Ausführung des vorstehend beschriebenen Nussknackers ist dadurch gekennzeichnet, dass Silikonringe 7 am Verschlusselement 2 den Schieber gegen Verrutschen sichern und so sowohl ein ungewolltes, selbstständiges öffnen als auch ein Herabgleiten des Schiebers von der Hülse 1 verhindern.

Die vorliegende Erfindung soll nicht auf die dargestellten Ausführungsformen beschränkt sein. Der in den angehängten Ansprüchen definierte Schutzbereich deckt auch Änderungen und Variationen der vorliegenden Erfindung ab.

### Bezugszeichenliste

- 1, 1': rohrförmige Hülse
- 2: Verschlusselement/Schieber
- 3: Stößel
- 4: Hülsendeckel
- 5: Bodenelement
- 6: Dämpfungssilikonring 1 (Dämpfungselement)
- 7: Silikonringe
- 8: Feder/Stahlfeder
- 9: Befestigungsbolzen
- 10: Loch für Luftdruckausgleich
- 11: Füllöffnung für Nüsse
- 12: durchsichtige Flächenformen
- 13: konisch ausgeformte Fläche

## Patentansprüche

1. Nussknacker zum manuellen Öffnen einer Nuss-Schale durch Schwenk- oder Schüttelbewegung, umfassend
eine Hülse (1, 1'), in der
ein Stößel (3) beweglich gelagert ist,
wobei der Stößel (3) mit einem Befestigungsbolzen (9) an einer Feder (8) befestigt ist, wobei die Feder (8) wiederum mit einem Hülsendeckel (4) verbunden ist,
wobei der Hülsendeckel (4) an einem Ende der Hülse (1, 1') befestigt ist,
wobei die Hülse (1, 1') ein Bodenelement (5) aufweist, das dem Hülsendeckel (4) gegenüberliegt,
wobei die Hülse (1, 1') eine Öffnung (11) umfasst,
wobei eine Nuss-Schale durch die Öffnung (11) zwischen Bodenelement (5) und Stößel (3) einbringbar ist und ein Schlag zum Öffnen der Nuss-Schale durch Bewegung des Stößels (3) in Richtung der Nuss-Schale ausgeführt werden kann und wobei der Stößel (3) nach jedem Schlag durch die Feder (8) in seine Ausgangsposition rückholbar ist, so dass die geöffnete Nuss-Schale durch die Öffnung (11) entnommen werden kann.

2. Nussknacker nach Anspruch 1, wobei ein Verschlusselement (2) vorgesehen ist, um die Öffnung (11) zu verschließen, wobei das Verschlusselement (2) bevorzugt auf der Hülse (1, 1') verschieblich gelagert ist.

3. Nussknacker nach Anspruch 1 oder 2, **dadurch gekennzeichnet, dass** ein Loch (10) oder mehrere Löcher (10) und/oder seitliche Rillen in dem Stößel (3) vorgesehen sind.

4. Nussknacker nach Anspruch 1, 2 oder 3, **dadurch gekennzeichnet, dass** Löcher (10) in dem Hülsendeckel (4) und/oder dem Bodenelement (5) vorgesehen sind.

5. Nussknacker nach einem der vorstehenden Ansprüche, **dadurch gekennzeichnet, dass** das Verschlusselement (2) und/oder die Hülse (1, 1') und/oder das Bodenelement (5) durchsichtig ist oder ein durchsichtiges Material umfasst.

6. Nussknacker nach Anspruch 5, **dadurch gekennzeichnet, dass** das Verschlusselement (2) und/oder die Hülse (1, 1') mit durchsichtigen Flächenformen (12) versehen ist bzw. sind.

7. Nussknacker nach einem der vorstehenden Ansprüche 2 bis 6, **dadurch gekennzeichnet, dass** das Verschlusselement (2) am unteren Ende an der Innenseite eine konisch geformte Fläche (13) aufweist.

8. Nussknacker nach einem der vorstehenden Ansprüche 2 bis 7, **dadurch gekennzeichnet, dass** ein Gummiring (7) oder Silikonring am Verschlusselement (2) dieses gegen Verrutschen sichert.

9. Nussknacker nach einem der vorstehenden Ansprüche, **dadurch gekennzeichnet, dass** ein Gummiring oder ein Silikonring (6) an dem Stößel (3) angeordnet ist, der einen Aufprall des Stößels (3) auf dem Hülsendeckel (4) dämpft.

10. Nussknacker nach einem der vorstehenden Ansprüche 2 bis 9, **dadurch gekennzeichnet, dass** ein Gummiring (7) oder Silikonring am Hülsendeckel (4) das Verschlusselement (2) verliersicher schützt.

11. Nussknacker nach einem der vorstehenden Ansprüche, **dadurch gekennzeichnet, dass** die Feder (8) zwischen dem Stößel (3) und dem Hülsendeckel (4) nur als Zugfeder ausgelegt ist.

12. Nussknacker nach einem der vorstehenden Ansprüche, **dadurch gekennzeichnet, dass** die Feder (8) zwischen dem Stößel (3) und dem Hülsendeckel (4) als Zug- und Druckfeder wirkt.

13. Nussknacker nach einem der vorstehenden Ansprüche, **dadurch gekennzeichnet, dass** die Hülse (1') einen rechteckigen, bevorzugt einen quadratischen Querschnitt aufweist.

14. Nussknacker nach einem der vorstehenden Ansprüche, **gekennzeichnet durch** einen Anschlag zwischen Stößel und Hülse (1, 1') bzw. Hülsendeckel (4), der die Bewegung des Stößels begrenzt.

15. Nussknacker nach einem der vorstehenden Ansprüche, **gekennzeichnet durch** einen Dämpfungselement, das außen am Bodenelement (5) angebracht ist, um einen Schlag des Nussknackers gegen den Boden zu dämpfen.
